Europäisches Patentamt

European Patent Office

Office européen des brevets

(19)

(11) Publication number: **0 095 224**

**A1**

# EUROPEAN PATENT APPLICATION

(12)

(21) Application number: **83300713.1**

(22) Date of filing: **11.02.83**

(51) Int. Cl.³: **B 29 F 1/022**

(30) Priority: **07.05.82 GB 8213241**

(43) Date of publication of application:
**30.11.83 Bulletin 83/48**

(84) Designated Contracting States:
**BE DE FR IT LU NL SE**

(71) Applicant: **TOOLING PRODUCTS (LANGRISH) LIMITED**
**Langrish**
**Petersfield Hampshire, GU32 1RL(GB)**

(72) Inventor: **Van den Braak, Henricus Gerardus E. M. J.**
**36 Pulens Crescent**
**Sheet Petersfield Hampshire(GB)**

(74) Representative: **Bayliss, Geoffrey Cyril et al,**
**BOULT, WADE & TENNANT 27 Furnival Street**
**London EC4A 1PQ(GB)**

(54) **Improvements in or relating to dies for moulding.**

(57) The disclosure relates to a die (14) for moulding plastic components (10) having two mould parts (14, 18) formed with mould surfaces defining the shape of the article to be moulded. One of the mould parts (14) has a core (21) for forming an "undercut" surface on the article to be moulded which is extendable and retractable by a guide member (31) actuated by a ram. When the two parts of the die are brought together to perform a moulding operation, an element (41) on one of the die parts (18) engages the guide to lock the core (21) in position for the moulding operation.

FIG. 3.

FIG 4.

EP 0 095 224 A1

## "IMPROVEMENTS IN OR RELATING TO DIES
## FOR MOULDING"

This invention relates to dies for moulding and is particularly although not exclusively applicable to dies for injection moulding.

The invention provides a die for moulding a plastics component comprising two separable mould parts having mould surfaces for defining the shape of an article to be moulded between them, at least one of the mould parts having an extendable/retractable core for defining part of the shape of the article to be moulded, said one mould part having a core guide member slidably mounted thereon for movement in a direction transverse to the direction of extension/retraction of the core member, guide means on the guide and core members for extending the core in response to movement of the guide member in one direction and retracting the core in response to movement of the guide in the opposite direction, and drive means for moving said guide in either direction to extend and retract the core between a moulding position and a retracted position in which the mould parts can be separated to permit an article moulded therebetween to be removed from the mould.

The following is a description of a specific embodiment of the invention, reference being made to the accompanying drawings in which:

Figure 1 is a perspective view of an injection moulded wrap-round vehicle bumper to be produced by the apparatus of the invention;

Figure 2 is a perspective view of a male part of an injection moulding die for moulding the bumper of Figure 1;

Figure 3 is a diagrammatic view of a coring mechanism at one end of the male die;

Figure 4 is a section through the coring mechanism;

Figure 5 is a plan view of the coring mechanism; and

Figure 6 is a perspective view of an alternative male die form.

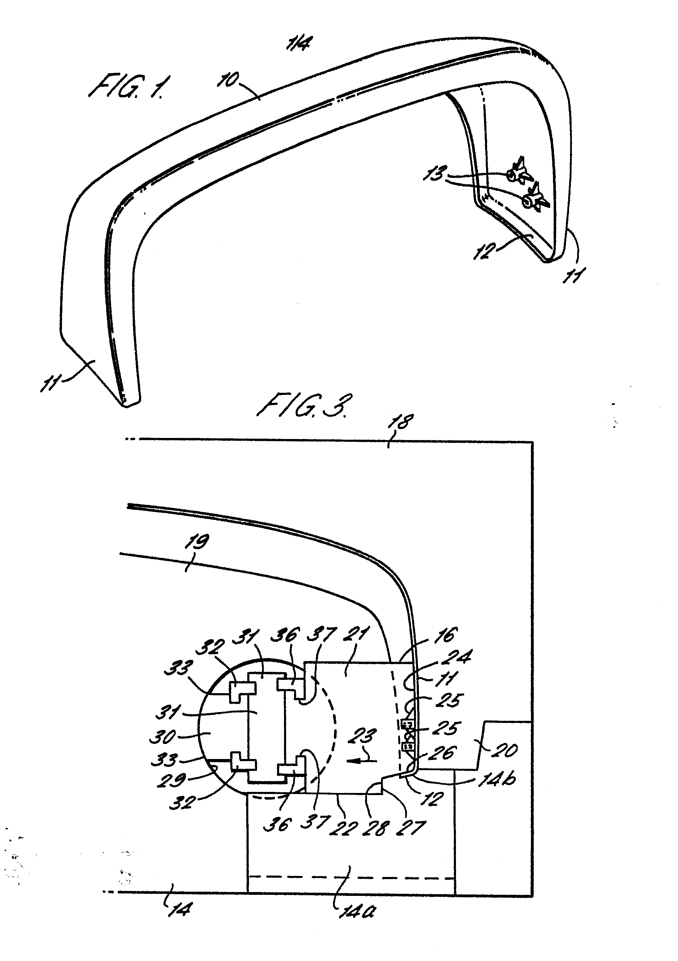

Reference is made firstly to Figure 1 of the drawings which illustrates and injection plastics moulded bumper 10 for a motor vehicle having wrap-round end portions 11 and an encircling flange 12 which extends around the entire periphery of the bumper including the ends of the wrap-round portions. The inside surfaces of the wrap-round portions 11 are formed with integral moulded raised bosses 13 to provide fixings for attaching the wrap round portions to the vehicle bodywork.

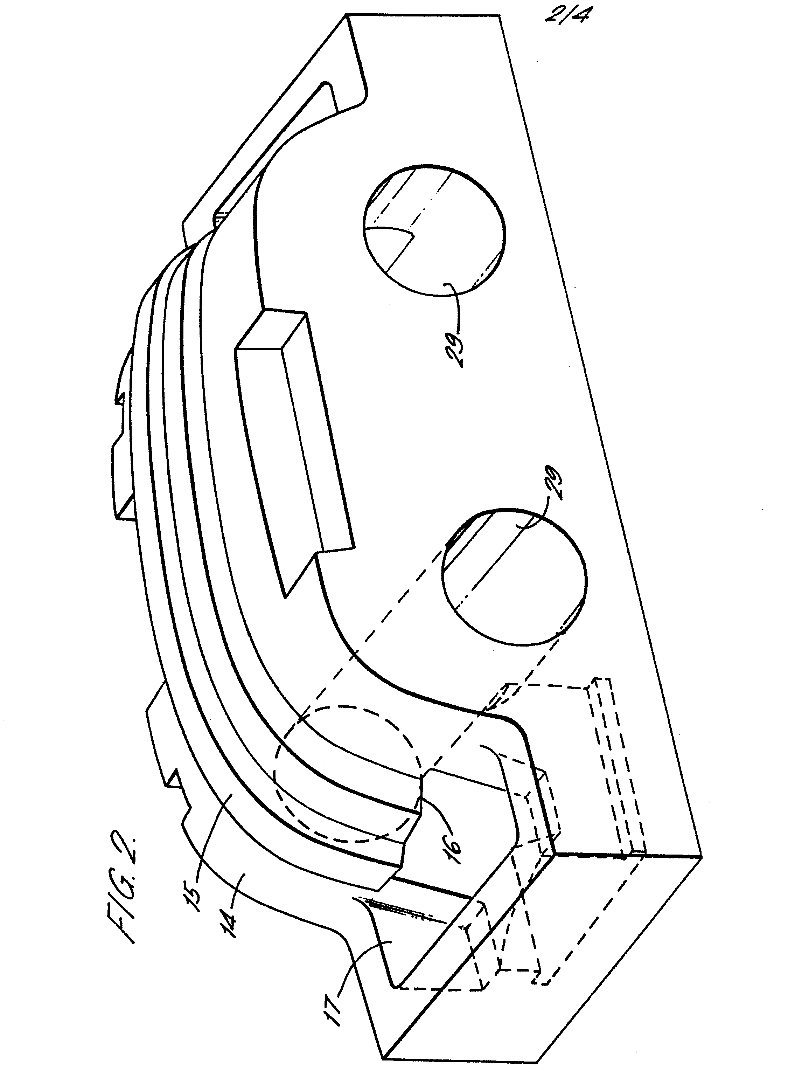

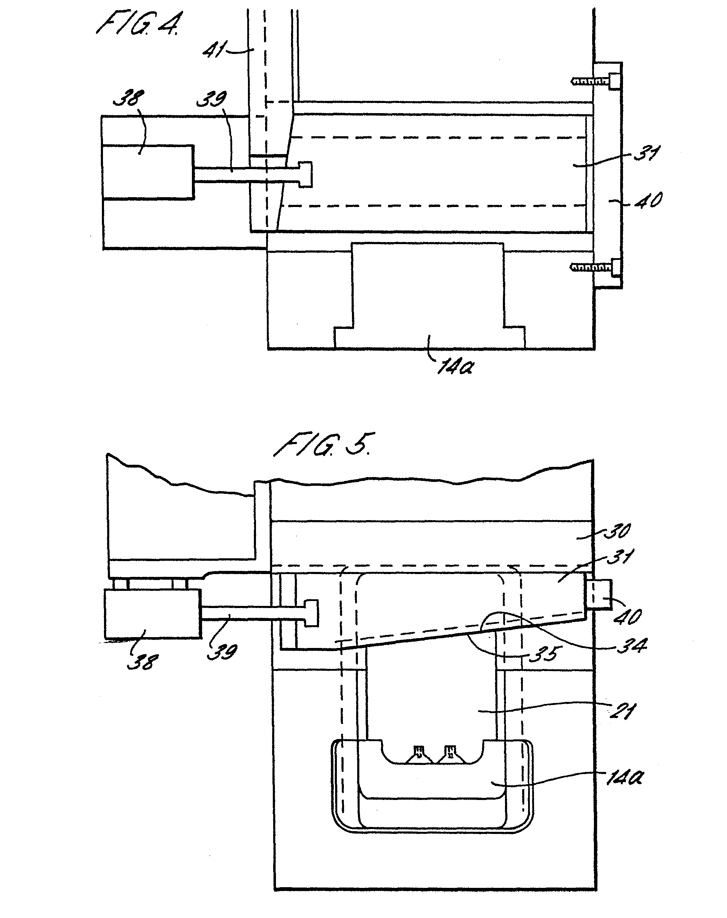

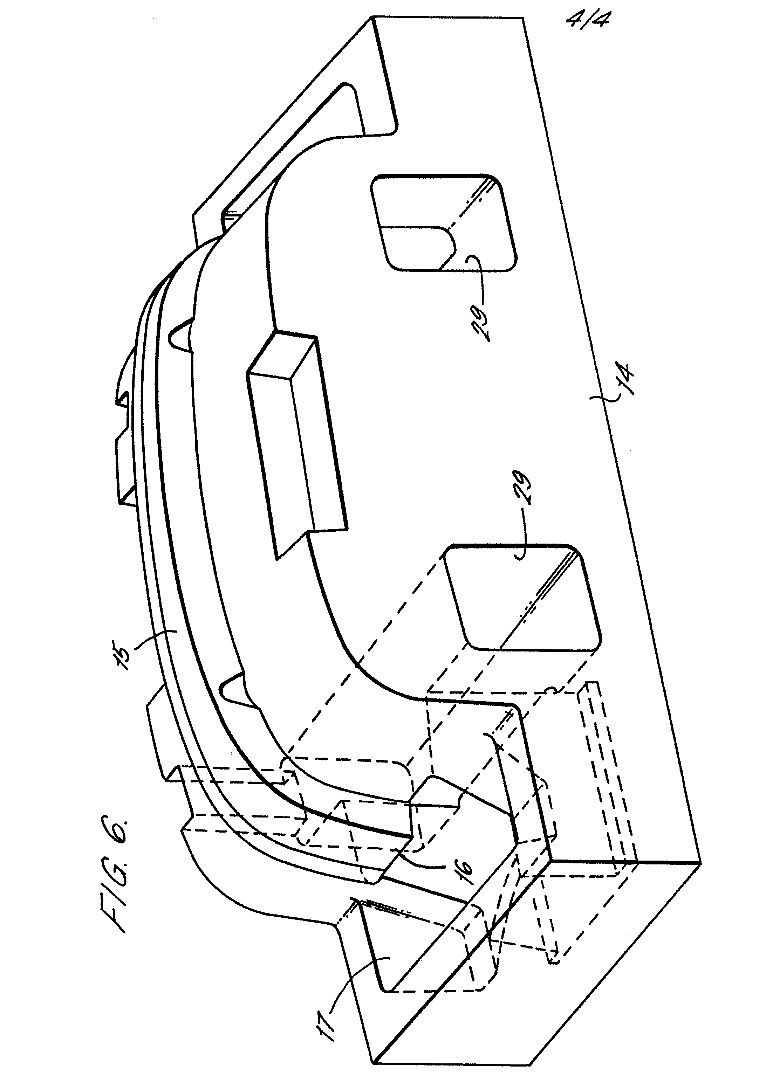

The bumper is moulded in a two-part injection moulding die the male part of which is illustrated in Figure 2 of the drawings and is designated by the reference numeral 14.  The male part has a shaped moulding surface 15 corresponding to the shape of the inside face of the bumper 10 except for the extreme end portions of the wrap-round parts 11.  The two ends of the mould surface 15 terminate in steps 16 over-hanging cavities 17 in the die part which receive coring mechanisms and, below the coring mechanisms, insert blocks 14a in the bottom of the die to be described with reference to Figures 3 to 5 below.  Figure 3 of the drawings illustrates a part of the female part 18 of the mould which has an inner mould surface 19 corresponding in shape to the outer surface of the bumper 10 to be moulded.  The female part 18 is formed with projections 20 at the ends of the mould surface 19 which  extend into the recesses 17 in the closed position of the die as best seen in Figure 3.

The coring mechanism at each end of the male mould surface 15 will now be described with reference to Figures 3 to 5.  A core 21 is mounted in a through-way 22 extending inwardly from the male mould surface 15 between shoulder 16 and the upper surface of the insert block 14a for movement between an extended moulding position and a retracted die operating position in the direction of the arrow 23. The core 21 is formed with a forward moulding surface 24 provided with appropriate cavities 25 to create the aforementioned bosses 13 on the inside of the moulding. The top surface of block 14a has a recess therein 14b to form with the lower corner 26 of the core 21 the undercut flange 12 at the end of the wrap-round portion 11 of the bumper. Partway along the top surface of the insert block 14a there is a step 27 extending across the block for engagement by a shoulder 28 on the core 21 to limit the forward movement of the core in the through-way 22 into the moulding position.

Behind the core 21 there is a cylindrical cavity 29 extending transversely to the direction of travel 23 of the core. The rearward side of the core remote from the mould face 24 thereof projects into the cavity 29 and a bearing block 30 extends along the length of the cylindrical cavity 29. A guide member 31 is mounted on the bearing block 30 for linear sliding movement along the block by means of two hardened steel tenons 32 mounted on the guide and engaging in slots 33 on the bearing block. The guide 31 has a wedge face 34 for engaging the core 21 and the core 21 has corresponding inclined surface 35 to run on the wedge face. Thus movement of the guide in one direction along the bearing block will force the core 21 outwardly in the direction of the arrow 23 into the moulding position. The guide 31 has two further tenons 36 mounted thereon which engage in slots 37 in the core so that movement of the guide 31 in the opposite direction will retract the core 21 from the moulding position to clear the core of the bosses 25 and flange 12 moulded on the bumper in the die and allow the bumper moulding created in the mould to be extracted from the male mould when the female mould part has been separated therefrom.

The guide member 31 is driven in either direction to extend and retract the core member 21 by a double acting hydraulic ram 38 mounted on the male die part and having a piston rod 39 connected to one end of the guide. Forward movement of the guide member 31 to extend the core 21 into the moulding position is limited by engagement of the guide with a stop 40 disposed on the opposite side of the guide to the cylinder as illustrated in Figure 5. When the male and female parts of the die 14, 18 are brought together to perform a moulding operation, a part 41 bolted on the female die part is arranged to engage behind the guide to lock the guide against stop 40 and thereby lock the core 21 in position for the moulding operation.

The core assembly at one end of the male die part has been described. A similar core assembly is also provided at the other end of the die part.

The arrangement thus permits fixing bosses, ribs and other features to be formed on the inside face of a wrap-round bumper moulding and enables the necessary core parts to create these features to be retracted to enable the moulding formed in the die to be stripped from the mould.

Figure 6 of the accompanying drawings illustrates an alternative form of male part of the die in which the circular openings for the core operating mechanism are replaced by rectangular section openings. The components operating in the openings are shaped appropriately. The arrangement is otherwise similar to that described above.

During manufacture of the die, the throughway to receive the retractable core is machined using access through the cavities in the die bottom which receive the insert blocks. Before the coring mechanisms are finally located in position the insert blocks 14a are assembled in the male die part and male and female die parts are brought together for benching and polishing the ends of the female die form and the recess 14b in insert block 14a using access through the cylindrical cavities 29. The insert block is then removed to enable the coring mechanism to be assembled in the male die part and is then refitted.

-7-

CLAIMS:

1. A die for moulding a plastics component comprising two separable mould parts having mould surfaces for defining the shape of an article to be moulded between them, at least one of the mould parts having an extendable/retractable core for defining part of the shape of the article to be moulded, said one mould part having a core guide member slidably mounted thereon for movement in a direction transverse to the direction of extension/retraction of the core member, guide means on the guide and core members for extending the core in response to movement of the guide member in one direction and retracting the core in response to movement of the guide in the opposite direction, and drive means for moving said guide in either direction to extend and retract the core between a moulding position and a retracted position in which the mould parts can be separated to permit an article moulded therebetween to be removed from the mould.

2. A die as claimed in claim 1 wherein stop means are provided for limiting the movement of the guide member in the direction to extend the core to define the moulding position of the core.

3. A die as claimed in claim 1 or claim 2 wherein the guide member has a wedge face for engaging the core and the core has a corresponding wedge face acting on the guide member whereby movement of the guide member in one direction causes the core member to be extended with respect to the mould part into the moulding position.

4. A die as claimed in any of the preceding claims wherein the guide member is formed with at least one projecting tenon element engaging in a side slot in the core member whereby movement of the guide member in said other direction retracts the core member.

5. A die as claimed in claim 4 wherein the guide member is provided with two tenon elements which engage in slots in opposite sides of the core member.

6. A die as claimed in any of the preceding claims wherein the guide member bears on a support block on the opposite side of the guide member to the core and is constrained to slide linearly with respect to the block by at least one tenon projecting from the guide member and engaging in a slot in a side of the block.

7. A die as claimed in claim 6 wherein two tenons are provided on the guide member engaging slots in opposite sides of the block.

8. A die as claimed in any of the preceding claims wherein a double acting hydraulic ram is provided for moving the guide member in either direction.

9. A die as claimed in any of the preceding claims wherein a locking element is provided to lock the core in position on said one part of the mould when the die is closed for a moulding operation.

10. A die as claimed in any of the preceding claims having two such cores at spaced locations on the mould surface of said one part of the mould.

11. A die as claimed in any of the preceding claims having a mould cavity for moulding a wrap-round bumper, the die having a male part for forming the inner surface of the bumper and a female part for forming the outer surface, two cores being mounted on the male part for moulding the inside end faces of the wrap-round portions of the bumper.

0095224

FIG. 1.

FIG. 3.

FIG. 2.

15
14
17
16
29
29

2/4

0095224

FIG. 4.

FIG. 5.

0095224

3/4

FIG. 6.

15

17

16

29

29

29

14

4/4

0095224

## DOCUMENTS CONSIDERED TO BE RELEVANT

EP 83300713.1

| Category | Citation of document with indication, where appropriate, of relevant passages | Relevant to claim | CLASSIFICATION OF THE APPLICATION (Int. Cl. 3) |
|---|---|---|---|
| X | GB - A - 1 027 065 (VEREINIGTE DEUTSCHE METALLWERKE) <br> * Totality * | 1-4,6, 11 | B 29 F 1/022 |
| A | DE - B2 - 2 308 359 (KRAUSS-MAFFEI) <br> * Totality * | 1-4,6, 9,11 | |
| A | AT - B - 359 276 (SUSCHNY) <br> * Totality * | | |
| A | DE - B2 - 1 629 231 (WEST-PLAST) <br> * Totality * | | |
| A | DE - B1 - 2 440 900 (THEYSOHN) <br> * Totality * | | |
| A | US - A - 3 905 740 (LOVEJOY) <br> * Totality * | | |

TECHNICAL FIELDS SEARCHED (Int. Cl. 3)

B 29 C 1/00
B 29 F 1/00
B 29 H 5/00

The present search report has been drawn up for all claims

| Place of search VIENNA | Date of completion of the search 29-07-1983 | Examiner MAYER |
|---|---|---|